# EUROPÄISCHE PATENTSCHRIFT

(11) **EP 0 990 053 B1**
(45) Veröffentlichungstag und Bekanntmachung des Hinweises auf die Patenterteilung: **21.11.2001**
(21) Anmeldenummer: 98925316.6
(22) Anmeldetag: 15.06.1998
(51) Int. Cl.: C22B 7/02, C22B 1/24, C21B 13/00, C21B 13/12, C21B 11/10, C21C 5/52

(54) **VERFAHREN UND ANLAGE ZUM HERSTELLEN EINER EISENSCHMELZE IM ELEKTRO-LICHTBOGENOFEN UNTER EINSATZ VON AGGLOMERIERTEN EISENHÄLTIGEN HÜTTENWERKSRESTSTOFFEN**
PROCESS AND PLANT FOR PRODUCING IRON SMELT IN AN ELECTRIC ARC FURNACE BY USING AGGLOMERATED, IRON-CONTAINING STEEL WORK RESIDUES
DISPOSITIF ET INSTALLATION PERMETTANT DE PRODUIRE DU FER EN FONTE DANS UN FOUR A ARC ELECTRIQUE EN UTILISANT DES RESIDUS METALLURGIQUES AGGLOMERES CONTENANT DU FER

(30) Priorität: 18.06.1997 AT 105997
(43) Veröffentlichungstag der Anmeldung: 05.04.2000
(73) Patentinhaber: VOEST-ALPINE INDUSTRIEANLAGENBAU GMBH, 4020 Linz (AT)
(72) Erfinder: LEHNER, Johann, A-4020 Linz (AT); FLEISCHANDERL, Alexander, A-4645 Grünau (AT); PIRKLBAUER, Wilfried, A-4491 Niederneukirchen (AT); DIMITROV, Stefan, A-4030 Linz (AT)
(74) Vertreter: VA TECH Patente GmbH
(86) Internationale Anmeldenummer: AT9800145
(87) Internationale Veröffentlichungsnummer: WO9858091

(56) Entgegenhaltungen:
- EP-A- 0 657 549
- EP-A- 0 657 552
- WO-A-96/34120
- DE-A- 3 150 291
- FR-A- 2 497 235
- US-A- 4 407 672
- US-A- 4 940 487
- US-A- 5 186 742
- DATABASE WPI Section Ch, Week 7907 Derwent Publications Ltd., London, GB; Class M24, AN 79-12681b XP002079088 & JP 54 001216 A (DAIDO TOKUSHUKU KK) , 8. Januar 1979
- KAAS W. ET AL. : "Erzeugung und Verarbeitung armierter Filterstaubbriketts aus der Edelstahlerzeugung " STAHL UND EISEN, Bd. 104, Nr. 7, 2. April 1984, Seiten 357-362, XP002079087 Düsseldorf,DE

## Beschreibung

Die Erfindung betrifft ein Verfahren zum Herstellen einer Eisenschmelze, insbesondere einer Rohstahlschmelze, unter Einsatz von eisenhältigen Hüttenwerksreststoffen, sowie eine Anlage zur Durchführung des Verfahrens.

Es ist für ein Direktreduktionsverfahren von Eisenerz mit nachfolgendem Einschmelzen von Eisenschwamm unter gleichzeitiger Kohlevergasung bekannt (AT-B - 376.241), in erster Linie aus staubförmigem Kohlenstoff bestehende Feststoffpartikel aus dem in einer Einschmelzvergasungszone gebildeten Reduktionsgas sowie aus dem beim Direktreduzieren entstehenden Abgas abzuscheiden, die abgeschiedenen Feststoffpartikel mit Bindemittel, u.a. mit Eisenoxidstaub, zu versetzen, zu Formkoks heiß zu brikettieren und den Formkoks anschließend dem Einschmelzprozeß wiederum zuzuführen.

Nachteilig ist jedoch hierbei, daß infolge des Einbringens von Eisenoxiden im Einschmelzvergaser Reduktionsarbeit geleistet werden muß, um das Eisenoxid zu reduzieren, wodurch für den Einschmelzvorgang benötigte Energie diesem entzogen wird und eine Störung des in der Einschmelzvergasungszone ablaufenden Prozesses stattfindet. Weiters stellt die genannte Heißbrikettierung im Hinblick auf die Investitions- und Betriebskosten eine aufwendige Lösung dar.

Aus der DE-A - 41 23 626 ist es bekannt, Hüttenwerksreststoffe gemischter Konsistenz zu agglomerieren, u.zw. unter Zuhilfenahme von Bindemitteln, Schlackenbildnern und Reduktionsmitteln, und die Agglomerate in den oberen Möllerbereich eines Schmelzaggregates einzubringen, wobei die Vorwärmung und Trocknung der Agglomerate in diesem Möllerbereich des Schmelzaggregates erfolgt. Der Möller durchsetzt das Schmelzaggregat nach dem Gegenstromprinzip, wobei er zunächst in einen im Inneren des Schmelzaggregates vorgesehenen Reduktionsbereich gelangt und anschließend im unteren Bereich des Schmelzaggregates geschmolzen wird.

Dieses bekannte Verfahren ist insofern energieaufwendig, als auch metallische Abfall- oder Reststoffe den Reduktionsbereich des Schmelzaggregates durchwandern müssen. Ein besonderes Problem stellt hierbei die Festigkeit der Agglomerate dar, da diese Agglomerate noch im Grünzustand, also nicht fertig getrocknet, eingesetzt werden, was in der Praxis große Schwierigkeiten durch Zerfall, Abrieb etc. verursacht. Beim Durchwandern des Schmelzaggregates nach dem Gegenstromprinzip kann es bei durch Druck- und Stoßkräfte verursachte Zerstörungen der Agglomerate zu einem Austragen eines hohen Anteiles derselben aus dem Schmelzaggregat durch das Abgas kommen. Aus diesem Grund ist das aus der DE-A - 41 23 626 bekannte Verfahren in der Praxis nur schwer verwirklichbar. Es müßten Agglomerate mit einer hohen Festigkeit, die auch im hohen Temperaturbereich gegeben sein müßte, hergestellt werden, was jedoch wiederum sehr aufwendig ist und insbesondere den Einsatz hochwertiger und entsprechend teurer Bindemittel erfordern würde.

Aus der AT-B - 380.901 ist es bekannt, metalloxidhältige Hüttenstäube zusammen mit kohlenstoffhältigem Material durch ein Drehrohr zu fördern, in einer heißen Zone des Rohres zu reduzieren und Eisenschwamm zu bilden und diesen Eisenschwamm in einen Konverter als Ersatz von Kühlschrott einzusetzen. Dieses Verfahren hat sich bei metalloxidhältigen Hüttenstäuben bewährt, erfordert jedoch einen zusätzlichen apparativen und verfahrenstechnischen Aufwand zur Einstellung einer reduzierenden Atmosphäre. Zudem können lediglich metalloxidhältige Hüttenstäube mit diesem Verfahren verwertet werden; für einen Einsatz von in größerem Ausmaß metallisches Eisen enthaltenden Stäuben ist dieses Verfahren nicht vorgesehen.

Ein Verfahren der eingangs beschriebenen Art ist ebenfalls aus der EP-A - 0 623 684 bekannt. Hierbei gelingt eine vollständige und energiesparende Verwertung von Abfall- und Reststoffen der Hüttenindustrie bei einem Verfahren zur Direktreduktion von Eisenerz zu Eisenschwamm und dem Einschmelzen des Eisenschwammes in einer Kohlevergasungszone, wobei es jedoch erforderlich ist, die Abfall- bzw. Reststoffe nach ihrer chemischen Zusammensetzung in Gruppen getrennt zu sammeln. Eine erste Gruppe beinhaltet hauptsächlich Eisen in oxidischer Form, eine zweite Gruppe Eisen in metallischer Form und eine dritte Gruppe hauptsächlich kohlenstoffhältige Stoffe. Die erste Gruppe wird in die Direktreduktionszone und die zweite und dritte Gruppe direkt in die Einschmelzvergasungszone eingesetzt, wobei vor dem Einsatz ein Eindicken und Granulieren der in Form von Schlämmen anfallenden Abfall- und Reststoffe durchgeführt wird.

Bei diesem bekannten Verfahren ist in erster Linie daran gedacht, die beim Direktreduzieren bzw. Einschmelzen und bei der Kohlevergasung in den Abgasen anfallenden Stäube wiederum der Direktreduktion bzw. dem Einschmelzprozeß und Kohlevergasungsprozeß zuzuführen. Dies ist insoferne aufwendig, als die Agglomerate wiederum denselben Prozessen zugeführt werden, aus denen sie entstammen. Sie müssen dort also wiederum aufgeheizt werden und durchlaufen diese Prozesse sozusagen ein zweites Mal und können erst anschließend in einem Folgeprozeß, z.B. einem Prozeß zur Herstellung von Stahl aus Roheisen, weiterverarbeitet werden.

Aus der US-A - 5,100,464 ist es ebenfalls bekannt, Hüttenwerksreststoffe zu mischen, mit Molasse zu binden und kalt zu Briketts zu formen und diese in einen Konverter zu chargieren.

Ein Verfahren dieser Art ist auch aus der WO-A - 96/34120 sowie der US-E-RE-30,795 und der US-A - 4,119,455 bekannt.

Weiters sind zahlreiche Verfahren zum Einschmelzen von zinkhältigen Hüttenwerksstäuben bekannt, bei denen zinkhältige Stäube mittels elektrischer Energie, wie mittels Plasmabrenner oder herkömmlicher Elektro-Lichtbogen, eingeschmolzen werden. Diese Verfahren dienen der Rückgewinnung des Zinks, nicht jedoch zur Herstellung einer Eisenschmelze. Diese Verfahren sind unter den Namen "Mintek-Verfahren", "Elkem-Verfahren", "IMS-Tetronics-Verfahren" bzw. "Davy McKee-Verfahren" bekannt.

Es ist allgemein bekannt, beim Hochofenprozeß, Sauerstoffblasprozeß bzw. beim Direktreduzieren von Eisenerz zu Eisenschwamm anfallende Stäube im Naßverfahren aus den bei diesen Verfahren sich bildenden Abgasen abzuscheiden und die dabei gebildeten Schlämme zu trocknen, jedoch werden die Schlämme meist aus Gründen des geringen Aufwandes anschließend auf Deponie gelegt. Dies hat man bisher in Kauf genommen, da diese Schlämme (als Trockensubstanz) gewichtsmäßig nur etwa 1,5 % der produzierten Stahlmenge ausmachen. Mit zunehmendem Umweltbewußtsein tritt nunmehr verstärkt die Forderung nach Vermeidung solcher Deponien auf. Dies ist jedoch mit Schwierigkeiten verbunden, da die Verwertung der Stäube in der Hüttenindustrie derzeit - wie oben dargelegt - einen hohen Aufwand, wie eine Selektion,erfordert und die Stäube oft wiederum mit Abgasen ausgetragen werden.

Die WO-A - 96/34120 offenbart es, eisenhältige Hüttenwerksreststoffe in Form von Agglomeraten zu verwerten, wobei die Reststoffe ausschließlich einem nach dem Sauerstoffblasverfahren ablaufenden Stahlherstellungsprozess zugeführt werden.

Die EP-A-657549 offenbart ein Verfahren, bei welchem feinkörnige Eisenträger, insbesondere Hüttenstäube, zusammen mit kohlenstoffhältigen Reduktionsmitteln in die Schaumschlacke einer in einem Elektro-Lichtbogenofen erzeugten Stahlschmelze eingeleitet werden.

Die EP-A-657552 offenbart die Verwendung einer Rohstahlschmelze zur Verwertung von zinkhältigen Hüttenstäuben, die in der Form von Pellets oder Kaltagglomeraten in die Roheisenschmelze eingeleitet werden, um das in den Pellets bzw. Agglomeraten enthaltene Zink wiederzugewinnen.

Sowohl die US-A-5186742 als auch die US-A-4407672 beschreiben die Rückgewinnung von Eisen aus eisenhältigen Hüttenstäuben durch Wiedereinleitung der pelletisierten Stäube oder von mit Kalk gebundenen Staubagglomeraten in einen Elektro-Lichtbogenofen. Der Erfindung liegt die Aufgabe zugrunde, eisenhältige Hüttenwerksreststoffe, bei denen Eisen sowohl in metallischer als auch in oxidischer Form vorliegen kann, unter möglichst geringem Energieaufwand und unter einem nur geringe Investitionen erfordernden apparativen Aufwand wirkungsvoll zu verwerten, nämlich unter Rückgewinnung des in diesen Hüttenwerksreststoffen enthaltenen Eisens, wobei nach Möglichkeit in der Praxis bereits bewährte Technologien Verwendung finden können. Insbesondere soll vermieden werden, daß die Stäube bei der Stahlerzeugung hintereinander vorgesehene Prozeßstufen mehrmals durchlaufen und diese zusätzlich belasten.

Diese Aufgabe wird erfindungsgemäß durch die Kombination nachfolgender Merkmale gelöst:
- Hüttenwerksreststoffe werden zu Agglomeraten verarbeitet,
- die Agglomerate werden in einen Elektro-Lichtbogenofen chargiert, wobei der Betrieb des Elektro-Lichtbogenofens in Schaumschlackenfahrweise erfolgt,
- aufgeschmolzen,
- in einer Roheisenschmelze mit einem dafür ausreichend hohen Kohlenstoffgehalt reduziert,
- und die daraus resultierende Schmelze gefrischt.

Es ist von besonderem Vorteil, wenn in den Elektro-Lichtbogenofen zusätzlich flüssiges und/oder festes Roheisen chargiert wird, das ebenfalls gefrischt wird, wobei zweckmäßig das Roheisen mindestens teilweise vor den Hüttenwerksreststoffen chargiert wird. Aus energetischen Gründen wird das Roheisen in flüssigem Zustand chargiert. Es kann jedoch auch in Form von Masseln eingesetzt werden, entweder zur Gänze oder nur zum Teil. Ein Teil des Roheisens kann auch durch Schrott ersetzt werden. Es besteht auch die Möglichkeit, das Roheisen durch einen aus der Restschmelze verbleibenden, aufgekohlten Sumpf zu ersetzen. Die Aufkohlung kann durch Zugabe von Stück- und/oder Staub-Kohle/Koks erfolgen.

Eine Roheisenschmelze mit einem ausreichend hohen Kohlenstoffgehalt weist beispielsweise einen Gehalt von 4,3 % Kohlenstoff auf

Mit dem erfindungsgemäßen Verfahren gelingt es, Hüttenwerksreststoffe in großen Mengen zu verarbeiten. Vorteilhaft werden Hüttenwerksreststoffe in einer Menge von vorzugsweise etwa 40 bis 50 % des Gesamteinsatzes chargiert.

Als Metallprodukt kann ein Rohstahl, ein Semistahl oder flüssiges Roheisen hergestellt werden.

Vorteilhaft wird jedoch bei regulärem Betrieb, d.h. bei in normalen Mengen anfallenden Hüttenwerksreststoffen, bis auf einen Kohlenstoffgehalt von maximal 0,1 % gefrischt, d.h., daß das Metallprodukt ein Rohstahl ist.

Das erfindungsgemäße Verfahren eignet sich auch sehr gut zum Verarbeiten von Walzzunderschlamm, wobei dieser vorteilhaft vorher entölt wird, u.zw. durch Behandeln mit spezifischen Kalkadditiven, wie Branntkalk. Durch diese Maßnahme kann das im Walzzunderschlamm enthaltene Öl durch CaO chemisch dispergiert werden, bevor eine Hydratisierungsreaktion mit Wasser eintritt.

Als Hüttenwerksreststoff werden insbesondere Stäube und/oder Schlämme aus dem Konverter- und/oder Elektro-Lichtbogenofen-Betrieb und/oder der Roheisenerzeugungsanlage und/oder der Direktreduktionsanlage chargiert.

Die Hüttenwerksreststoffe werden vorteilhaft vor dem Chargieren gemischt und mit Branntkalk als Bindemittel versetzt, worauf die Hüttenwerksreststoffe agglomeriert und die Agglomerate auf weniger als 5 % Restfeuchte getrocknet werden.
Vorzugsweise wird zunächst vorzugsweise flüssiges Roheisen in den Elektro-Lichtbogenofen chargiert, worauf die Hüttenwerksreststoffe über eine vorbestimmte Zeitdauer kontinuierlich chargiert werden und währenddessen der Frischvorgang durchgeführt wird, wobei zweckmäßig zum Abdampfen von Zink eine vorbestimmte Restzeit gefrischt, ohne daß ein Chargieren von Hüttenwerksreststoffen durchgeführt wird.

Eine Anlage zur Durchführung des erfindungsgemäßen Verfahrens ist folgendermaßen gestaltet: mit einem Mischreaktor, in den mindestens eine Hüttenwerksreststoffe zuführende Leitung sowie eine H₂O-Zuführungsleitung und eine Bindemittel zuführende Leitung münden, mit einer Agglomeriereinrichtung, mit einer Trockeneinrichtung, von der die getrockneten Agglomerate zu einer Siebeinrichtung geführt werden können, mit einem Elektro-Lichtbogenofen, in den mindestens eine die Agglomerate zuführende Leitung mündet, mit einer von der Siebeinrichtung die Grobfraktion in den Elektro-Lichtbogenofen durch mindestens eine Deckelöffnung führenden Leitung und gegebenenfalls einer die Feinfraktion zu mindestens einer in den Elektro-Lichtbogenofen ragenden Lanze führenden Leitung, mit einer in den Elektro-Lichtbogenofen mündenden Zuführung für Roheisen, einer Abstichöffnung für die Schlacke und einer Abstichöffnung für die erzeugte Eisenschmelze.

Vorzugsweise weist die Anlage ein Filtersystem auf, zu dem eine vom Lichtbogenofen ausgehende Abgasleitung führt und von welchem Filtersystem eine Leitung für aus dem Abgas abgeschiedene Stäube zum Mischreaktor führt, wobei zweckmäßig von der Trockeneinrichtung eine Brüden ableitende Leitung ausgeht, die zum Filtersystem führt.

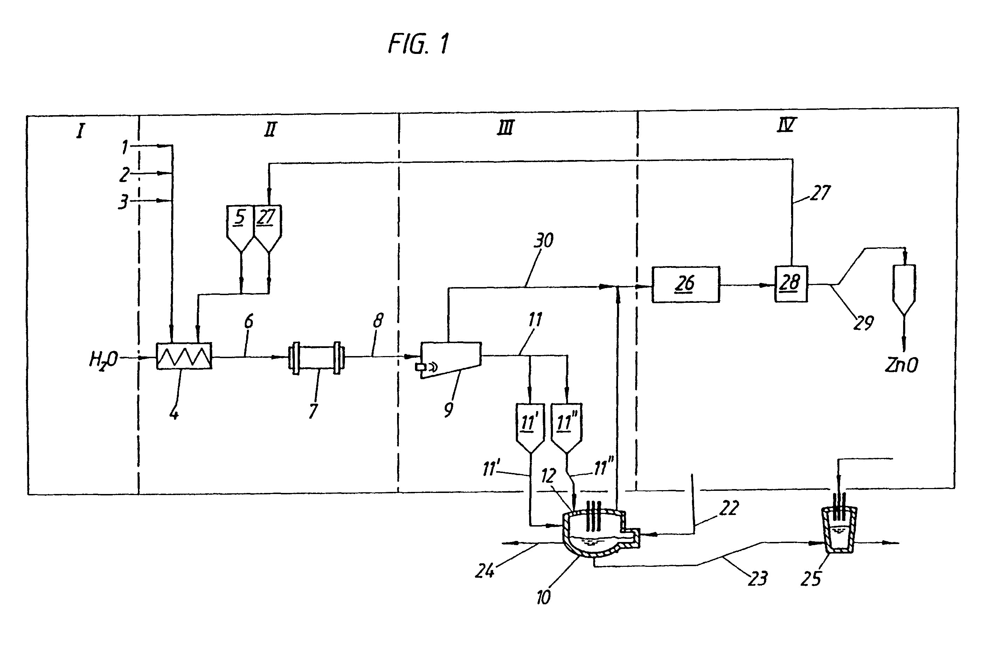

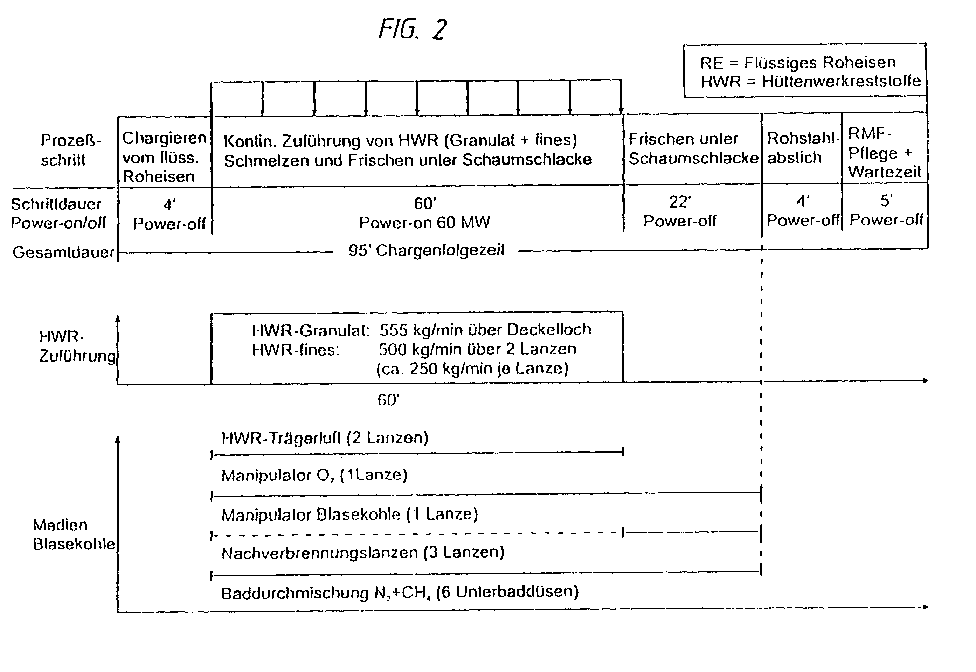

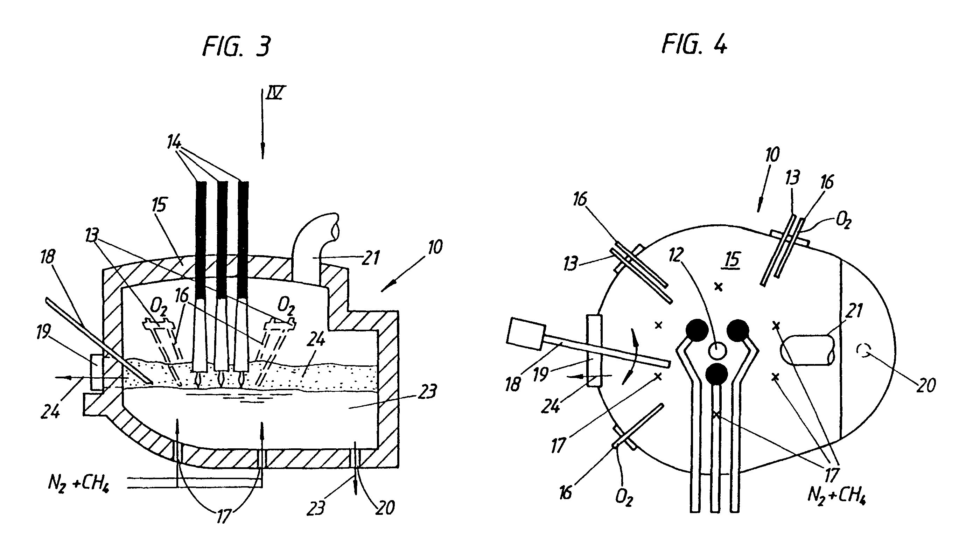

Die Erfindung ist nachfolgend anhand eines in der Zeichnung dargestellten Ausführungsbeispieles näher erläutert, wobei Fig. 1 das erfindungsgemäße Verfahren in schematischer Flow-Sheet-Darstellung veranschaulicht. Fig. 2 gibt für ein Ausführungsbeispiel den Prozeßablauf im Elektro-Lichtbogenofen wieder. Fig. 3 zeigt einen Schnitt durch einen Elektroofen, wie er beim erfindungsgemäßen Verfahren zum Einsatz gelangt, und Fig. 4 ist eine Draufsicht auf diesen Ofen in Richtung des Pfeiles IV der Fig. 3.

Das in Fig. 1 dargestellte Flow-Sheet ist in vier Felder, die mit I bis IV bezeichnet sind, unterteilt. In Feld I sind die Einsatzstoffe für die Durchführung des erfindungsgemäßen Verfahrens aufgelistet. Feld II betrifft die Agglomeration, Feld III die Nachbehandlung nach der Agglomeration vor Einsatz in den Elektro-Lichtbogenofen. Feld IV betrifft die Abgasbehandlung.

Das erfindungsgemäße Verfahren eignet sich zum Entsorgen sämtlicher Hüttenwerksreststoffe, insbesondere auch von ölhältigem Walzzunderschlamm 1, sowie Hochofenschlamm 2 und weiters Stäuben 3 aus dem Konverterbetrieb und aus dem Elektro-Lichtbogenofenbetrieb. Diese Hüttenwerksreststoffe werden einem Mischreaktor 4 zugeführt, in dem sie unter Zugabe von Wasser gut durchmischt werden. Der ölhältige

Das erfindungsgemäße Verfahren eignet sich zum Entsorgen sämtlicher Hüttenwerksreststoffe, insbesondere auch von ölhältigem Walzzunderschlamm 1, sowie Hochofenschlamm 2 und weiters Stäuben 3 aus dem Konverterbetrieb und aus dem Elektro-Lichtbogenofenbetrieb. Diese Hüttenwerksreststoffe werden einem Mischreaktor 4 zugeführt, in dem sie unter Zugabe von Wasser gut durchmischt werden. Der ölhältige Walzzunderschlamm 1 wird - falls notwendig - zuvor mit Branntkalk behandelt, wodurch das Öl chemisch dispergiert wird, bevor eine Hydratisierungsreaktion mit Wasser eintritt. Hierdurch wird ein rieselfähiges Pulver gebildet, in dem das Öl fest gebunden vorliegt. Durch diese Maßnahme kann der Walzzunderschlamm 1 gemeinsam mit den Stäuben 3 aus dem Konverterbetrieb bzw. Elektro-Lichtbogenofenbetrieb und dem Hochofenschlamm 2 weiter verarbeitet werden. Gegebenenfalls kann das durch das Dispergieren gebildete Pulver, wenn es eine Grobfraktion enthält, in eine Staubfraktion und in eine Grobfraktion getrennt werden, wobei die Grobfraktion vor dem Zumischen zu den anderen Hüttenwerksreststoffen 2, 3 gemahlen wird.

Im Mischreaktor 4 erfolgt zusätzlich zur Mischung der Hüttenwerksreststoffe 1 bis 3 auch die Zumischung von Branntkalk 5 als Bindemittel, wobei Branntkalk 5 in einer Größenordnung vorzugsweise zwischen 5 und 10 % zugegeben wird. Der Feuchtegehalt wird über die Wasserzugabe auf etwa 15 Gew.% eingestellt.

Sobald das Gemisch 6 ausreagiert ist, wird es in den Mischgranulator 7 überführt, in dem Grünpellets 8 gebildet werden. Diesem Mischgranulator 7 kann eine in der Zeichnung nicht dargestellte Rolliertrommel nachgeschaltet werden, falls Grünpellets 8 in einer bestimmten Mindestgröße gefordert sind. Die Grünpellets 8 weisen zweckmäßig einen Durchmesser zwischen 5 und 10 mm auf und haben eine Feuchte von etwa 15 %.

Anschließend an die Granulation erfolgt eine Trocknung der Grünpellets, vorteilhaft in einem Schwingtrockner 9, auf eine Feuchte < als 5 %. Hierdurch erreichen die Grünpellets 6 eine ausreichende Festigkeit für die Chargierung in einen Elektro-Lichtbogenofen 10. Bei Einsatz eines Schwingtrockners 9 wird während des Schwingtransportes der Grünpellets 6 in Richtung zur Austragsöffnung des Schwingtrockners Heißluft durch den Anströmboden und die Produktschicht hindurchgeleitet, wodurch die Grünpellets 6 auf die erforderliche maximale Feuchte getrocknet werden. Die dem Schwingtrockner zugeführte Luft wird über ein Erdgas-Brenner-System vorgewärmt.

Anschließend werden die getrockneten Pellets 11 in zwei Siebfraktionen 11', 11" getrennt, u.zw. zweckmäßig durch eine Schwingsiebung, wobei eine Grobfraktion 11" der Pellets mit einer Korngröße über 5 mm und eine Freinfraktion 11' mit Pellets bis zu 5 mm gebildet werden. Beide Fraktionen 11', 11" werden anschließend in den Elektro-Lichtbogenofen 10 chargiert, u.zw. die Grobfraktion 11" über mindestens ein Deckelloch 12 und die Feinfraktion 11' über Lanzen 13. Die Mengenverhältnisse der zu chargierenden Feinfraktion 11' und Grobfraktion 11" können für einen optimalen Schmelzbetrieb im Elektro-Lichtbogenofen 10 in einem weiten Bereich flexibel gestaltet werden.

Der Elektro-Lichtbogenofen 10 kann sowohl als Gleichstrom- oder als Wechselstrom-Ofen betrieben werden. Beim in den Fig. 3 und 4 dargestellten Ausführungsbeispiel wird er mit Wechselstrom betrieben. Drei Graphitelektroden 14 ragen durch den Deckel 15 in das Innere. Der Ofen 10 ist mit einer Deckelöffnung 12 zur Zuführung der Grobfraktion 11" der Hüttenwerksreststoffe 1 bis 3 sowie Zusätzen, so wie Kalk, Dolomit und anderen Schlackenbildnem sowie Stückkohle bzw. -koks etc. ausgestattet.

Die Feinfraktion 11' wird - wie erwähnt - über mit Luft beaufschlagte Lanzen 13 eingebracht. Zusätzlich sind noch Lanzen 16 zur Zuführung von Sauerstoff und/oder einem sauerstoffhältigen Gas, wie Luft, vorgesehen. Zur Erzielung einer intensiven Baddurchmischung ist der Elektro-Lichtbogenofen (10) mit Bodenspülelementen, vorzugsweise mit Bodendüsen 17 mit vorzugsweise Inertgas auszustatten. Über einen Manipulator 18wird durch die Schlackentür 19 Sauerstoff und Kohle in den Elektro-Lichtbogenofen 10 eingebracht.

Zur Aufkohlung des Metallbades kann der Elektro-Lichtbogenofen (10) mit mindestens einer Kohleunterbaddüse ausgestattet werden.

Der Rohstahlabstich 20 befindet sich an der der Schlackenabstichöffnung 19 gegenüberliegenden Seite des Elektro-Lichtbogenofens 10. Das im Elektro-Lichtbogenofen gebildete Abgas wird über einen Krümmer 21 in später noch zu beschreibender Weise der im Feld IV der Fig. 1 dargestellten Abgasnachbehandlung zugeführt.

In den Elektro-Lichtbogenofen wird zunächst Roheisen 22, beispielsweise aus einem Hochofen, eingebracht, vorzugsweise in einer Menge zwischen 50 und 60 % des Gesamteinsatzes. Anschließend werden über einen bestimmten Zeitintervall (vorzugsweise etwa 60 min) die Hüttenwerksreststoffe 1 bis 3, also die Fein- und die Grobfraktion 11' und 11", in den Elektro-Lichtbogenofen 10 chargiert. Währenddessen wird gleichzeitig mit Sauerstoff gefrischt. Anschließend wird über ein bestimmtes Zeitintervall nur gefrischt, u.zw. ohne Zugabe von Hüttenwerksreststoffen 1 bis 3, um das Zink weitgehend abzudampfen. Die tap-to-tap-Zeit beträgt etwa 90 bis 100 min.

Die Hüttenwerksreststoffe 1 bis 3 weisen in der Regel einen Kohlenstoffgehalt von etwa 7 Gew.% auf, so daß bei einer Fahrweise mit etwa 60 % Roheisen 22 und 40 % Hüttenwerksreststoffen 1 bis 3 kaum zusätzliche Kohle zur Reduktion benötigt wird. Der Schlackenabstich erfolgt bei Schaumschlackenfahrweise ab der Hälfte der tap-to-tap-Zeit kontinuierlich, wobei pro Tonne Rohstahl 23 etwa 140 kg Schlacke 24 anfallen. Einer Verwertung der Schlacke 24 für Baustoffe stehen aufgrund der chemischen Zusammensetzung der Schlacke keine Bedenken entgegen.

Vorzugsweise wird im Elektro-Lichtbogenofen 10 ein fertig gefrischter Qualitätsrohstahl 23 mit weniger als 0,1 % Kohlenstoff erzeugt.

### Typische Eigenschaften des Rohstahles 23:

| | |
|---|---|
| 0,05 % | C |
| 0,08 % | Mn |
| 0,016 % | P |
| 0,073 % | S |
| Abstichtemperatur | 1650°C |

Eine Entschwefelung erfolgt während einer nachfolgenden sekundärmetallurgischen Behandlung. Diese sekundärmetallurgische Behandlung erfolgt vorteilhaft in einem Pfannenofen 25.

Die Abgase aus der Trocknung der Grünpellets 8 und aus dem Elektro-Lichtbogenofen 10 werden einem Filtersystem 26 zugeführt, von dem der anfallende Staub 27 in den Hüttenwerksreststoffe-Aufbereitungsprozeß rezirkuliert wird.

Um die sich aufkonzentrierenden Komponenten (z.B. Zn, Pb etc.) auszuschleusen, kann mittels laseroptischer Messung 28 bei Überschreitung eines Gehaltes an diesen Komponenten im Staub ein Teilstrom 29 ausgeschleust werden. Dieser Teilstrom 29 kann entweder noch weiter aufkonzentriert werden oder direkt an weitere Verarbeiter (z.B. Zinkhütten) übergeben werden.

Das erfindungsgemäße Verfahren weist gegenüber den herkömmlichen Verfahren wesentliche Vorteile auf:
- Durch die Hüttenwerksreststoff-Verarbeitung zu einer eisenhältigen Schmelze können beträchtliche Erlöse erzielt werden.
- Der eingesetzte Elektro-Lichtbogenofen 10 zeigt große Flexibilität im Einsatzverhältnis Roheisen 24/Hüttenwerksreststoff 1 bis 3; somit kann in einfacher Weise auf schwankende Hüttenwerksreststoffmengen und Zusammensetzungen reagiert werden.
- Je nach Wunsch des Betreibers kann sowohl ein gefrischter Rohstahl 23, ein Semistahlprodukt oder ein flüssiges Roheisen erzeugt werden.
- Der vom Elektro-Lichtbogenofen 10 emittierte Staub 27 wird zur Zinkanreicherung bis zur Erlangung eines bestimmten Zinkgehaltes rezirkuliert. Durch die hohe Zinkanreicherung können die anfallenden Reststoffmengen minimiert werden.
- Bei der Konditionierung der Hüttenwerksreststoffe 1 bis 3 werden keine Organika über die Bindemittel 5 eingebracht.
- Durch die hohe Temperatur wird keine prozeßbedingte Zink- bzw. Bleikondensation im Elektro-Lichtbogenofen 10 hervorgerufen. Weiters ergeben sich keine Probleme mit der Ofenausmauerung, da der Prozeßablauf bei Schaumschlackenfahrweise erfolgt.
- Bei optimalem Einsatzverhältnis der Einsatzstoffe kann die Schlacke 24 als Baustoff verwertet werden. Damit entstehen keine zusätzlichen Deponierungskosten.
- Die Investitionskosten des Elektro-Lichtbogenofens 10 sind im Vergleich zu einem Schachtofen geringer.
- Ein schnelles An- und Abfahren des Elektro-Lichtbogenofens 10 stellt kein Problem dar.

Demgegenüber weist eine Verfahrensroute über einen Schachtofen die Nachteile auf, daß ein schnelles An- und Abfahren eines Schachtofens nicht möglich ist, daß eine weit höhere Festigkeit der Granulate, d.h. der Pellets erforderlich ist, die mitunter gar nicht erreicht werden kann, und daß Temperaturen über 950°C erforderlich werden, um das Zinkkondensat-Problem in den Schachtaustritts-Zonen in den Griff zu bekommen.

### Ausführungsbeispiel:

In den Mischreaktor werden ölhältiger Walzzunder 1, der mit einem Additiv vorbehandelt wurde, sowie Gichtschlamm 2, Konverterstaub 3 und Kalk eingebracht. Als Additiv für den ölhältigen Walzzunder 1 ist Branntkalk vorgesehen. Die Mengenverhältnisse sind in nachfolgender Tabelle I wiedergegeben.

**Tabelle I**

| | | |
|---|---|---|
| ölhältiger Walzzunder 1 | 6,9 t/h 50.000 t/a | 8,3 t/h 60.000 t/a |
| Additiv Branntkalk | 1,4 t/h 10.000 t/a | |
| Gichtschlamm 2 | | 6,9 t/h 50.000 t/a |
| Konverterstaub 3 | | 25,0 t/h 180.000 t/a |
| Kalk | | 3,0 t/h 20.000 t/a |

Insgesamt werden in den Mischreaktor 4 44,1 t/h bzw. 317.200 t/a eingebracht. Es ist eine Zugabe von Wasser in der Menge von 1 t/h bzw. 7.200 t/a erforderlich. Nach Bildung der Granulate bzw. Pellets 8 und Überführung derselben in den Trockner 9 erfolgt die Siebung, wobei 40 t/h, d.h. 288.000 t/a, an Pellets 11 anfallen, u.zw. 19 t/h mit Feinfraktion 11' und 21 t/h Grobfraktion 11". Das sind 136.800 t/a Feinfraktion 11' und 151.200 t/a Grobfraktion 11". 4,1 t/h Brüden 30 werden im Trockner gebildet, das sind 29.200 t/a. Die Brüden 30 werden ebenfalls dem Filtersystem 26 zugeleitet.

Diese Fein- und Grobfraktion 11', 11" wird in den Elektro-Lichtbogenofen 10 chargiert, der mit einem Einsatzmix von 60 % flüssigem Roheisen 22 und 40 % Hüttenwerksreststoffen 1, 2, 3 betrieben wird. Je Tonne im Elektro-Lichtbogenofen 10 erzeugten Rohstahls 23 werden 278 kg Pellets größer als 5 mm (Grobfraktion 11") über den Deckel 15 zusammen mit 14,3 kg Stückkalk und 14,2 kg Stückdolomit sowie 250 kg Feinfraktion 11', also Pellets kleiner als 5 mm, mit Hilfe von 25 Nm³ Druckluft über zwei Lanzen 13 zugeführt. Über den Manipulator 18 werden 26,4 Nm³ Sauerstoff und 1,7 kg Blasekohle in den Elektro-Lichtbogenofen 10 eingebracht. Das flüssige Roheisen 22 wird zu Beginn des Prozesses in den Elektro-Lichtbogenofen in einer Menge von 791 kg im flüssigen Zustand chargiert, wobei das Roheisen 22
4,3 % Kohlenstoff,
0,6 % Silizium,
0,5 % Mangan,
0,09 % Phosphor und
0,005 % Schwefel,
Rest Eisen,
enthält. Das Roheisen 22 weist eine Temperatur von 1320°C auf. Über die Bodendüsen 17 werden 0,5 Nm³ N₂ und 0,5 Nm³ CH₄ zur Baddurchmischung eingebracht. Über drei Nachverbrennungslanzen wird 14,7 Nm³ O₂ knapp unterhalb der Schlackenoberfläche zugeführt, so daß eine teilweise CO+H₂-Nachverbrennung aus dem primär entstehenden Ofenabgas erfolgt und die daraus entstehende Energie effizient an das Metallbad übertragen wird.

Ca. 83 Nm³ Falschluft gelangen ebenfalls in den Elektro-Lichtbogenofen 10. In diesem bilden sich unter Zuführung von 500 kWh elektrische Energie 143 kg Schlacke 24 mit der in Tabelle II angegebenen Zusammensetzung.

**Tabelle II**

| | |
|---|---|
| 27,9 % | FeOₙ |
| ca. 5 % | Feₘₑₜ |
| CaO/SiO₂ = 2,2 | |
| 7,1 % | MgO |
| < 5,4 % | Na₂O |
| 1,27 % | P₂O₅ |
| 0,42 % | S |

Abgestochen werden 1000 kg Rohstahl 23 mit der in Tabelle III angegebenen chemischen Zusammensetzung. Die Temperatur des Rohstahles beträgt 1650°C.

**Tabelle III**

| | |
|---|---|
| 0,05 % | C |
| 0,08 % | Mn |
| 0,016 % | P |
| 0,073 % | S |
| 120 ppm | Zn |
| 30 ppm | Pb |
| 40 ppm | N |

Der Prozeßablauf für das oben beschriebene Ausführungsbeispiel ist der Fig. 2 zu entnehmen.

## Patentansprüche

1. Verfahren zum Herstellen einer Eisenschmelze, insbesondere einer Rohstahlschmelze (23), unter Einsatz von eisenhältigen Hüttenwerksreststoffen (1 bis 3), **gekennzeichnet durch** die Kombination der folgenden Merkmale:
• Hüttenwerksreststoffe (1 bis 3) werden zu Agglomeraten (8, 11) verarbeitet,
• die Agglomerate (8, 11) werden in einen Elektro-Lichtbogenofen (10) chargiert, wobei der Betrieb des Elektro-Lichtbogenofens in Schaumschlackenfahrweise erfolgt,
• aufgeschmolzen,
• in einer Roheisenschmelze mit einem dafür ausreichend hohen Kohlenstoffgehalt reduziert,
• und die daraus resultierende Schmelze gefrischt.

2. Verfahren nach Anspruch 1, **dadurch gekennzeichnet, daß** in den Elektro-Lichtbogenofen (10) zusätzlich flüssiges und/oder festes Roheisen (22) chargiert wird, das ebenfalls gefrischt wird.

3. Verfahren nach Anspruch 2, **dadurch gekennzeichnet, daß** das Roheisen (22) mindestens teilweise vor den Hüttenwerksreststoffen (1 bis 3) chargiert wird.

4. Verfahren nach Anspruch 3, **dadurch gekennzeichnet, daß** das Roheisen (22) teilweise oder zur Gänze durch einen aufgekohlten Restsumpf ersetzt wird.

5. Verfahren nach einem oder mehreren der Ansprüche 2 bis 4, **dadurch gekennzeichnet, daß** Hüttenwerksreststoffe (1 bis 3) in einer Menge von mindestens 5 %, vorzugsweise in einer Menge von etwa 40 bis 50 %, des Gesamteinsatzes chargiert werden.

6. Verfahren nach einem oder mehreren der Ansprüche 1 bis 5, **dadurch gekennzeichnet, daß** als Metallprodukt Rohstahl, Semistahl oder flüssiges Roheisen erzeugt wird.

7. Verfahren nach einem oder mehreren der Ansprüche 1 bis 6, **dadurch gekennzeichnet, daß** ein Rohstahl mit einem Kohlenstoffgehalt von maximal 0,1 % erzeugt wird.

8. Verfahren nach einem oder mehreren der Ansprüche 1 bis 7, **dadurch gekennzeichnet, daß** als Hüttenwerksreststoff Walzzunderschlamm (1) chargiert wird, der vorzugsweise mit Branntkalk behandelt wird, insbesondere vor dem Agglomerieren..

9. Verfahren nach einem oder mehreren der Ansprüche 1 bis 8, **dadurch gekennzeichnet, daß** als Hüttenwerksreststoff Stäube und/oder Schlämme (3) aus dem Konverter- und/oder Elektro-Lichtbogenofen-Betrieb und/oder Roheisenerzeugungsanlage und/oder Direktreduzierungsanlage (2) chargiert werden.

10. Verfahren nach einem oder mehreren der Ansprüche 1 bis 9, **dadurch gekennzeichnet, daß** die Hüttenwerksreststoffe (1 bis 3) vor dem Chargieren gemischt und mit Branntkalk (CaO) (5) als Bindemittel versetzt werden, worauf die Hüttenwerksreststoffe (1 bis 3) agglomeriert und die so gebildeten Agglomerate (8) auf weniger als 5 % Restfeuchte getrocknet werden.

11. Verfahren nach einem oder mehreren der Ansprüche 1 bis 10, **dadurch gekennzeichnet, daß** zunächst Roheisen (22) in den Elektro-Lichtbogenofen (10) chargiert wird, worauf die Hüttenwerksreststoffe (1 bis 3) über eine vorbestimmte Zeitdauer kontinuierlich chargiert werden und währenddessen der Frischvorgang durchgeführt wird.

12. Verfahren nach Anspruch 11, **dadurch gekennzeichnet, daß** eine vorbestimmte Restzeit gefrischt wird, ohne daß ein Chargieren von Hüttenwerksreststoffen (1 bis 3) erfolgt.

13. Anlage zur Durchführung des Verfahrens nach einem oder mehreren der Ansprüche 1 bis 12,
• mit einem Mischreaktor (4), in den mindestens eine Hüttenwerksreststoffe (1 bis 3) zuführende Leitung, sowie eine H₂O-Zuführungsleitung und eine Bindemittel (5) zuführende Leitung münden,
• mit einer Agglomeriereinrichtung (7),
• mit einer Trockeneinrichtung, von der die getrockneten Agglomerate (11) zu einer Siebeinrichtung geführt werden können,
• mit einem Elektro-Lichtbogenofen (10), in den mindestens eine die Agglomerate (11) zuführende Leitung mündet,
• mit einer von der Siebeinrichtung die Grobfraktion (11") in den Elektro-Lichtbogenofen (10) durch mindestens eine Deckelöffnung (12) führenden Leitung und gegebenenfalls einer die Feinfraktion (11') zu mindestens einer in den Elektro-Lichtbogenofen (10) ragenden Lanze (13) führenden Leitung,
• mit einer in den Elektro-Lichtbogenofen mündenden Zuführung für Roheisen (22), einer Abstichöffnung für die Schlacke (24) und einer Abstichöffnung für die erzeugte Eisenschmelze (23).

14. Anlage nach Anspruch 13, **dadurch gekennzeichnet, daß** der Elektro-Lichtbogenofen (10) mindestensmit einer Kohlenstoffunterbaddüse (17) ausgestattet ist.

15. Anlage nach Anspruch 13 oder 14, **gekennzeichnet durch** ein Filtersystem (26), zu dem eine vom Lichtbogenofen (10) ausgehende Abgasleitung (21) führt und von welchem Filtersystem (26) eine Leitung für aus dem Abgas abgeschiedene Stäube (27) zum Mischreaktor (4) führt.

16. Anlage nach Anspruch 15, **dadurch gekennzeichnet, daß** von der Trockeneinrichtung (9) eine Brüden (30) ableitende Leitung ausgeht, die zum Filtersystem (26) führt.

## Claims

1. Method for producing an iron melt, in particular a crude steel melt (23), using iron-containing residual smelting plant materials (1 to 3), **characterized by** the combination of the following features:
• residual smelting plant materials (1 to 3) are processed into agglomerates (8, 11),
• the agglomerates (8, 11) are charged into an electric arc furnace (10), the electric arc furnace being operated in foamed slag,
• melted,
• reduced in a crude iron melt with a sufficiently high carbon content therefor,
• and the resultant melt is refined.

2. Method according to Claim 1, **characterized in that** the electric arc furnace (10) is additionally charged with liquid and/or solid pig iron (22), which is likewise refined.

3. Method according to Claim 2, **characterized in that** the pig iron (22) is charged at least partially before the residual smelting plant materials (1 to 3).

4. Method according to Claim 3, **characterized in that** the pig iron (22) is substituted partially or entirely by a carburized residual liquid pool.

5. Method according to one or more of Claims 2 to 4, **characterized in that** residual smelting plant materials (1 to 3) are charged in an amount of at least 5%, preferably in an amount of approximately 40 to 50%, of the total charge.

6. Method according to one or more of Claims 1 to 5, **characterized in that** crude steel, semisteel or liquid pig iron is produced as the metal product.

7. Method according to one or more of Claims 1 to 6, **characterized in that** a crude steel with a carbon content of at most 0.1% is produced.

8. Method according to one or more of Claims 1 to 7, **characterized in that** rolling scale slurry (1), which is preferably treated with calcined lime, in particular before agglomeration, is charged as the residual smelting plant material.

9. Method according to one or more of Claims 1 to 8, **characterized in that** dusts and/or slurries (3) from converter and/or electric arc-furnace operation and/or the pig-iron production installation and/or the direct reduction installation (2) are used in particular for charging as residual smelting plant material.

10. Method according to one or more of Claims 1 to 9, **characterized in that** the residual smelting plant materials (1 to 3) are mixed before charging and have calcined lime (CaO) (5) added as a binder, whereupon the residual smelting plant materials (1 to 3) are agglomerated and the agglomerates (8) thus formed are dried to a residual moisture content of less than 5%.

11. Method according to one or more of Claims 1 to 10, **characterized in that** first of all pig iron (22) is charged into the electric arc furnace (10), whereupon the residual smelting plant materials (1 to 3) are continuously charged over a predetermined time period and, during this time, the refining process is carried out.

12. Method according to Claim 11, **characterized in that** refining takes place for a predetermined remaining time, without any charging of residual smelting plant materials (1 to 3) being carried out.

13. Installation for carrying out the method according to one or more of Claims 1 to 12,
• with a mixing reactor (4), into which there opens at least one line feeding in residual smelting plant materials (1 to 3), an H₂O feed line and a line feeding in binder (5),
• with an agglomerating device (7),
• with a drying device, from which the dried agglomerates (11) can be passed to a screening device,
• with an electric arc furnace (10), into which there leads at least one line feeding in the agglomerates (11),
• with a line passing the coarse fraction (11'') from the screening device into the electric arc furnace (10) through at least one cover opening (12) and optionally a line passing the fine fraction (11') to at least one lance (13) protruding into the electric arc furnace (10),
• with a feed for pig iron (22) leading into the electric arc furnace, a tapping opening for the slag (24) and a tapping opening for the iron melt (23) produced.

14. Installation according to Claim 13, **characterized in that** the electric arc furnace (10) is provided with at least one carbon under-bath nozzle (17).

15. Installation according to Claim 13 or 14,
**characterized by** a filter system (26), to which there leads a waste-gas line (21), extending from the arc furnace (10), and from which filter system (26) a line for dusts (27) separated from the waste gas leads to the mixing reactor (4).

16. Installation according to Claim 15, **characterized in that** there extends from the drying device (9) a line carrying away vapours (30), which leads to the filter system (26).

## Revendications

1. Procédé pour la fabrication d'un bain de fer en fusion, en particulier d'un bain d'acier brut en fusion (23), en utilisant des résidus d'usines sidérurgiques (1 à 3) contenant du fer, **caractérisé par** la combinaison des caractéristiques suivantes:
• on transforme des résidus d'usines sidérurgiques (1 à 3) en agglomérés (8, 11),
• on charge les agglomérés (8, 11) dans un four à arc électrique (10), le four à arc électrique fonctionnant selon le procédé de la scorie moussante,
• on les fait fondre,
• on les réduit en un bain de fonte en fusion avec une teneur en carbone suffisamment élevée à cet effet,
• et on affine le bain de fusion qui en résulte.

2. Procédé selon la revendication 1, **caractérisé en ce que** l'on charge en plus dans le four à arc électrique (10) de la fonte liquide et/ou solide (22), que l'on affine également.

3. Procédé selon la revendication 2, **caractérisé en ce que** l'on charge la fonte (22) au moins en partie avant les résidus d'usines sidérurgiques (1 à 3).

4. Procédé selon la revendication 3, **caractérisé en ce que** l'on remplace la fonte (22) en partie ou en totalité par un talon résiduel carburé.

5. Procédé selon une ou plusieurs des revendications 2 à 4, **caractérisé en ce que** l'on charge les résidus d'usines sidérurgiques (1 à 3) en une quantité d'au moins 5%, de préférence en une quantité d'environ 40 à 50%, de la charge totale.

6. Procédé selon une ou plusieurs des revendications 1 à 5, **caractérisé en ce que** l'on produit, comme produit métallique, de l'acier brut, de l'acier semi-affiné ou de la fonte liquide.

7. Procédé selon une ou plusieurs des revendications 1 à 6, **caractérisé en ce que** l'on produit un acier brut avec une teneur en carbone de 0,1% au maximum.

8. Procédé selon une ou plusieurs des revendications 1 à 7, **caractérisé en ce que** l'on charge comme résidu d'usines sidérurgiques de la boue de battitures (1), qui est de préférence traitée à la chaux calcinée, en particulier avant l'agglomération.

9. Procédé selon une ou plusieurs des revendications 1 à 8, **caractérisé en ce que** l'on charge comme résidu d'usines sidérurgiques des poussières et/ou des boues (3) provenant du fonctionnement de convertisseurs et/ou de fours à arc électrique et/ou d'une installation de production de fonte et/ou d'une installation de réduction directe (2).

10. Procédé selon une ou plusieurs des revendications 1 à 9, **caractérisé en ce que** l'on mélange les résidus d'usines sidérurgiques (1 à 3) avant le chargement et on les déplace avec de la chaux calcinée (CaO) (5) comme agent liant, on agglomère ensuite les résidus d'usines sidérurgiques (1 à 3) et on sèche les agglomérés ainsi obtenus (8) à moins de 5% d'humidité résiduelle.

11. Procédé selon une ou plusieurs des revendications 1 à 10, **caractérisé en ce que** l'on charge d'abord de la fonte (22) dans le four à arc électrique (10), on charge ensuite les résidus d'usines sidérurgiques (1 à 3) en continu pendant une durée prédéterminée tout en exécutant l'opération d'affinage.

12. Procédé selon la revendication 11, **caractérisé en ce que** l'on affine pendant une durée résiduelle prédéterminée, sans procéder à un chargement de résidus d'usines sidérurgiques (1 à 3).

13. Installation pour la mise en oeuvre du procédé selon une ou plusieurs des revendications 1 à 12,
• avec un réacteur mélangeur (4), dans lequel débouchent au moins une conduite amenant des résidus d'usines sidérurgiques (1 à 3), ainsi qu'une conduite d'arrivée de H₂O et une conduite amenant un agent liant (5),
• avec un dispositif d'agglomération (7),
• avec un dispositif de séchage, à partir duquel les agglomérés séchés (11) peuvent être conduits à un dispositif de criblage,
• avec un four à arc électrique (10), dans lequel débouche au moins une conduite amenant les agglomérés (11),
• avec une conduite menant la fraction grossière (11") du dispositif de criblage dans le four à arc électrique (10) à travers au moins une ouverture (12) du couvercle et éventuellement une conduite menant la fraction fine (11') à au moins une lance (13) pénétrant dans le four à arc électrique (10),
• avec une arrivée débouchant dans le four à arc électrique pour la fonte (22), une ouverture d'évacuation pour la scorie (24) et une ouverture de coulée pour le bain de fer en fusion produit (23).

14. Installation suivant la revendication 13,
**caractérisée en ce que** le four à arc électrique (10) est équipé d'au moins une buse (17) d'injection de carbone au fond du bain.

15. Installation suivant la revendication 13 ou 14,
**caractérisée par** un système de filtrage (26), auquel mène une conduite de gaz brûlés (21) venant du four à arc électrique (10) et à partir duquel système de filtrage (26) une conduite pour les poussières (27) précipitées hors des gaz brûlés mène au réacteur mélangeur (4).

16. Installation suivant la revendication 15,
**caractérisée en ce qu'**une conduite évacuant les fumées (30) part du dispositif de séchage (9) et mène au système de filtrage (26).
